# EUROPEAN PATENT APPLICATION

(11) **EP 1 859 998 A1**
(43) Date of publication of application: **28.11.2007**
(21) Application number: 06729078.3
(22) Date of filing: 14.03.2006
(51) Int. Cl.: B60R 21/01, B60R 21/16

(54) **ACTUATOR OF CREW PROTECTOR**

(30) Priority: 15.03.2005 JP 2005073150
(71) Applicant: TOYOTA JIDOSHA KABUSHIKI KAISHA, Toyota-shi, Aichi-ken, 471-8571 (JP)
(72) Inventor: MATSUDA, Kazuaki, , Toyota-shi, Aichi, 4718571 (JP)
(74) Representative: Intes, Didier Gérard André
(86) International application number: PCT/JP2006/305044
(87) International publication number: WO 2006/098330

(57) **Abstract**

In an actuator of a passenger protection device, a sub ECU 200 is provided to actuate the passenger protection device in response to a normal ignition signal received from a main ECU 100 via an ignition communication line 2, and a manual cut-off switch 1 is turned on or off to selectively disable or enable operation of the passenger protection device. The actuation of the passenger protection device by the sub ECU 200 is inhibited when the manual cut-off switch 1 is turned to disable the operation of the passenger protection device. The actuator of the passenger protection device is **characterized in that**, when a collective-operation-specific ignition signal having a communication format different from that of the normal ignition signal is received, the sub ECU 200 actuates the passenger protection device irrespective of a switched state of the manual cut-off switch 1.

## Description

### TECHNICAL FIELD

This invention relates to an actuator of a passenger protection device, and more particularly to an actuator of a passenger protection device which has a manual cut-off unit which is turned on or off to selectively disable or enable operation of the passenger protection device.

### BACKGROUND ART

There is known an actuator of a passenger protection device which is capable of actuating, at the time of disposal of a plurality of passenger protection devices accommodated in an automotive vehicle, the plurality of passenger protection devices appropriately. For example, refer to the patent document 1 mentioned below. In this actuator, an actuation performing device, which receives an actuate instruction signal from an actuate instruction unit to actuate one passenger protection device, transmits an ignition signal to other actuation performing devices, in order to actuate other passenger protection devices which are actuated by the other actuation performing devices.

### [Patent Document 1]

Japanese Laid-Open Patent Application No. 11-29003

### DISCLOSURE OF THE INVENTION

### PROBLEM TO BE SOLVED BY THE INVENTION

However, in a case where a manual cut-off switch which is turned on or off to selectively disable or enable operation of a passenger protection device is provided in the above-mentioned actuator, when the manual cut-off switch is turned to disable the operation of the passenger protection device, the operation of the passenger protection device will be inhibited even if it receives an ignition signal.

According to one aspect of the invention, there is provided an actuator of a passenger protection device which includes a manual cut-off unit that is turned on or off to selectively disable or enable operation of the passenger protection device, and is adapted to actuate the passenger protection device certainly.

### MEANS FOR SOLVING THE PROBLEM

In an embodiment of the invention which solves or reduces one or more of the above-mentioned problems, there is provided an actuator of a passenger protection device, the actuator comprising: an actuating unit actuating the passenger protection device in response to reception of a first ignition signal; and a manual cut-off unit being turned on or off to selectively disable or enable operation of the passenger protection device, the actuation of the passenger protection device by the actuating unit being inhibited when the manual cut-off unit is turned to disable the operation of the passenger protection device, wherein, when a second ignition signal having a communication format different from that of the first ignition signal is received, the actuating unit actuates the passenger protection device irrespective of a switched state of the manual cut-off unit.

In an embodiment of the invention which solves or reduces one or more of the above-mentioned problems, there is provided an actuator of a passenger protection device, the actuator comprising: an actuate instruction unit outputting an actuate instruction signal to actuate the passenger protection device compulsorily; an ignition signal transmission unit transmitting an ignition signal in response to either detection of an impact to a vehicle or reception of the actuate instruction signal; an actuating unit actuating the passenger protection device in response to the ignition signal received from the ignition signal transmission unit; and a manual cut-off unit being turned on or off to selectively disable or enable operation of the passenger protection device, the actuation of the passenger protection device by the actuating unit being inhibited when the manual cut-off unit is turned to disable the operation of the passenger protection device, wherein the actuate instruction unit is provided to supply power to the actuating unit, and, when a power supply from the actuate instruction unit to the actuating unit is detected, the actuating unit actuates the passenger protection device irrespective of a switched state of the manual cut-off unit.

According to this embodiment of the invention, the actuating unit is provided to distinguish between a first ignition signal and a second ignition signal by a difference in a communication format, and even if the manual cut-off unit is turned to disable operation of a passenger protection device, the disable state of the manual cut-off unit can be canceled and the passenger protection device can be actuated certainly.

### EFFECT OF THE INVENTION

According to the embodiments of the invention, even if the actuator includes a manual cut-off unit which is turned on or off to selectively disable or enable operation of the passenger protection device, the passenger protection device can be actuated certainly.

### BRIEF DESCRIPTION OF THE DRAWINGS

FIG. 1 is a block diagram showing the composition of an actuator of a passenger protection device in an embodiment of the invention.
FIG. 2 is a diagram showing the structure of one data frame which is transmitted by each of a plurality of ECUs which constitute a CAN communication system.

### DESCRIPTION OF REFERENCE NUMERALS

1 manual cut-off switch
2 ignition communication line
3 collective operation power supply line
4 collective operation communication line
5 vehicle power supply line
6 main/sub ECU interconnect power supply line
12a, 12b, 22a, 22b squibs
14, 24 diodes
100 main ECU
200 sub ECU
300 collective operation tool
100a, 100b, 200a connectors

### BEST MODE FOR CARRYING OUT THE INVENTION

A description will now be given of an embodiment of the invention with reference to the accompanying drawings.

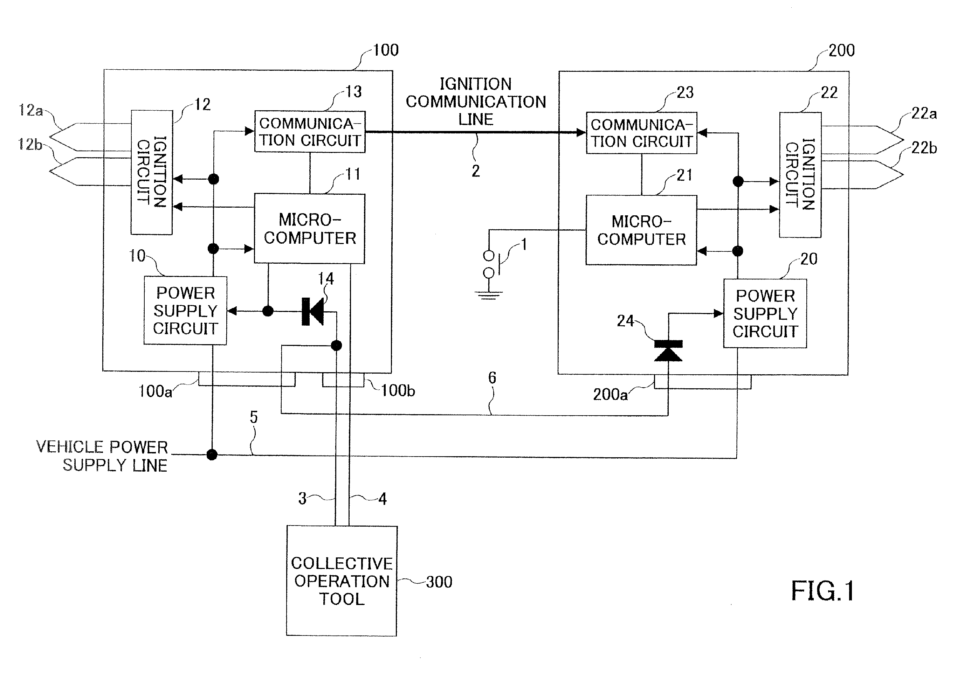

FIG. 1 shows the composition of an actuator of a passenger protection device in an embodiment of the invention. As shown, a main ECU 100, a sub ECU 200, and a collective operation tool 300 are interconnected by communication lines.

The main ECU 100 controls actuation (ignition) of each passenger protection device (which will be mentioned later), and the main ECU 100 generally includes a power supply circuit 10, a microcomputer 11, an ignition circuit 12, and a communication circuit 13. The main ECU 100 serves as an ignition signal transmission unit which transmits an ignition signal to the sub ECU 200 (which will be mentioned later).

The power supply circuit 10 receives power supply from a vehicle power supply line 5 outside the ECU 100 via a connector 100a of the ECU 100, and generates a power supply voltage supplied to the respective internal circuits of the ECU 100, including the microcomputer 11, the ignition circuit 12, and the communication circuit 13.

The microcomputer 11 performs a passenger protection device actuation judgment (ignition judgment) of each passenger protection device (which will be mentioned later) based on the detection values received from various sensors (not shown) arranged at respective parts of the vehicle and the detection value received from a safing sensor (not shown) provided in the main ECU 100.

For example, the various sensors arranged at the respective parts of the vehicle may include a center air bag sensor which is installed in a passenger compartment to detect an impact to the vehicle central part, a front air bag sensor which is installed at a front part of the vehicle, located ahead of the center air bag sensor, to detect an impact to the vehicle front part, side air bag sensors which are installed below the center pillars on the right and left sides of the vehicle to detect an impact to the vehicle side parts, and rear side air bag sensors which are installed below the center pillars on the right and lefts sides of the vehicle to detect an impact to the vehicle side parts. Each of these air bag sensors may be made of a piezoelectric type G sensor or a semiconductor type G sensor. The piezoelectric type G sensor is a sensor in which a piezoelectric element is stuck on the plate that detects the acceleration or deceleration of the vehicle, and this sensor detects a voltage value proportional to an amount of deformation of the piezoelectric element by collision. In contrast, the semiconductor type G sensor is a sensor which detects a voltage value proportional to an amount of deformation of a strain gauge by collision.

Besides the above-mentioned air bag sensors, the various sensors arranged at the respective parts of the vehicle may include a passenger detection sensor which detects the presence of a passenger or driver on a seat of the vehicle, a seat position sensor which is installed on a seat rail part to detect a seat slide position, and a buckle switch which detects the wearing of a seat belt by a passenger or driver.

The microcomputer 11 performs the passenger protection device actuation judgment of each passenger protection device based on the detection values of the above-mentioned sensors. Initially, the microcomputer 11 determines whether the passenger sits down on the seat by using the passenger detection sensor, determines whether the slide position of the seat is in a given position by using the seat position sensor, and determines whether the passenger wears the seat belt by using the buckle switch. Subsequently, the microcomputer 11 makes a judgment on the need for ignition of each passenger protection device based on predetermined ignition assessment conditions.

Specifically, when it is detected that the driver and the passenger sit down on the driver seat and the passenger seat and both the detection values of the front air bag sensor and the safing sensor exceed a predetermined value and the ON states are detected, it is determined that ignition is required for both the driver-seat air bag and the passenger-seat air bag.

Examples of the passenger protection devices may include driver-seat or passenger-seat air bags, such as front-impact air bags which ease and absorb an impact to the front parts of a passenger like the passenger's head or chest, knee air bags which ease and absorb an impact to the knee parts of a passenger, side air bags which ease and absorb an impact to the side parts of a passenger, seat belts with a pretensioner which heightens the effect of restricting a passenger, and curtain shield air bags which ease and absorb an impact to the head part of a passenger.

Similarly, the microcomputer 11 performs the passenger protection device actuation judgment of each of these passenger protection devices based on the detection values of the safing sensor and the air bag sensors. Specifically, when both the detection values of the front air bag sensor and the safing sensor exceed a predetermined value and the ON states are detected, it is determined that ignition is required for the knee air bag or the seat belt with pretensioner. When both the detection values of the side air bag sensor and the safing sensor exceed a predetermined value and the ON states are detected, it is determined that ignition is required for the side air bag. When the result of determination indicates that ignition is required for the side air bag, or when both the detection values of the rear side air bag sensor and the safing sensor exceed a predetermined value and the ON states are detected, it is determined that ignition is required for the curtain shield air bag.

In order to ignite the passenger protection device for which ignition is required, the microcomputer 11 outputs an ignition signal to the ignition circuit 12 or the sub ECU 200 which will be mentioned later.

The ignition circuit 12 ignites squibs 12a and 12b in response to the ignition signal received from the microcomputer 11. The squibs are respectively provided for the passenger protection devices assigned for the main ECU 100. For example, the squib 12a and the squib 12b, corresponding to the driver-seat air bag and the passenger-seat air bag, respectively, are provided.

It is a matter of course that increasing the number of the squibs is possible if needed, by providing an additional squib to ignite the driver-seat side air bag or the like.

The communication circuit 13 transmits the ignition signal from the microcomputer 11 to the sub ECU 200 via the ignition communication line 2.

The ignition signal transmitted via the ignition communication line 2 is an ignition signal which actuates the passenger protection device actuated by the sub ECU 200. Alternatively, there may provided a plurality of ignition communication lines 2.

The sub ECU 200 is an actuating unit which controls actuation (ignition) of each of the passenger protection devices assigned for the sub ECU 200, in response to the ignition signal received via the ignition communication line 2. Similar to the main ECU 100, the sub ECU 200 generally includes a power supply circuit 20, a microcomputer 21, an ignition circuit 22 which ignites squibs 22a and 22b, and a communication circuit 23 which receives an ignition signal from the main ECU 100 and transmits the ignition signal to the microcomputer 21.

The elements of the sub ECU 200 are essentially the same as the corresponding elements of the main ECU 100 described above, and a description thereof will be omitted.

How the passenger protection devices in the vehicle are assigned for the main ECU 100 and the sub ECU 200 may be set up based on the specifications of the vehicle or the like. For example, the passenger protection devices whose ignition is controlled by the main ECU 100 may include the driver-seat air bag, the driver-seat knee air bag, the driver-seat side air bag, and the driver-seat seat belt with pretensioner. In the meantime, the passenger protection devices whose ignition is controlled by the sub ECU 200 may include the passenger-seat air bag, the passenger-seat knee air bag, the passenger-seat side air bag, and the passenger-seat seat belt with a pretensioner. The curtain shield air bags may be assigned for the main ECU 100. The backseat knee air bags, the backseat side air bags, the backseat pretensioner seat belts with pretensioner, etc. may be assigned for the sub ECU 200.

For example, if the backseat side air bag is assigned for the sub ECU 200, the sub ECU 200 ignites the backseat side air bag in response to an ignition signal of the backseat side air bag from the main ECU 100. The sub ECU 200 may include other sensors, such as a backseat buckle switch and a backseat passenger detection sensor which detects the seating of a passenger. For example, the sub ECU 200 ignites the backseat seat belt with pretensioner based on the detection values of the backseat passenger detection sensor (which detects the seating of a passenger) and the backseat buckle switch, and the ignition signal of the front-seat seat belt with pretensioner from the main ECU 100.

Similarly, if the passenger-seat air bag is assigned for the sub ECU 200, the sub ECU 200 ignites the passenger-seat air bag in response to the ignition signal of the passenger-seat air bag from the main ECU 100.

The power supply circuit 20 of the sub ECU 200 receives power supply via the main/sub ECU interconnect power supply line 6 (which will be mentioned later) or the vehicle power supply line 5 outside the ECU, and generates a power supply voltage supplied to each of the internal circuits of the ECU, including the microcomputer 21, the ignition circuit 22, and the communication circuit 23. Namely, the power supply circuit of the sub ECU 200 is provided to generate a power supply voltage supplied to the respective internal circuits of the sub ECU 200 by receiving the power supply from the vehicle power supply line 5 which is connected to the in-vehicle power supplies, such as the battery and the dynamo. And the power supply circuit of the sub ECU 200 is provided to generate a power supply voltage supplied to the respective internal circuits of the sub ECU 200 by receiving the power supply from the main/sub ECU interconnect power supply line 6.

The sub ECU 200 includes a manual cut-off unit which is turned on or off to selectively disable or enable operation of a passenger protection device. As the manual cut-off unit, a manual cut-off switch 1 is connected to the sub ECU 200, and the switched state of this switch is inputted to the microcomputer 21. The manual cut-off switch 1 is a switch which is responsive to a switching operation to selectively disable or enable operation of a passenger protection device. Generally, the manual cut-off switch 1 is a key switch operated with the ignition key of the vehicle. For this reason, the state of the manual cut-off switch 1 generally cannot be changed after engine starting.

When the manual cut-off switch 1 is turned on, the microcomputer 21 determines that operation of the passenger protection devices assigned for the sub ECU 200 is disabled. The microcomputer 21 disables the driving of the ignition circuit 22 even if it receives an ignition signal from the main ECU 100. Therefore, in this state of the manual cut-off switch 1, the passenger protection devices assigned for the sub ECU 200 are not ignited.

On the other hand, when the manual cut-off switch 1 is turned off, the microcomputer 21 determines that operation of the passenger protection devices assigned for the sub ECU 200 is enabled. The microcomputer 21 enables the driving of the ignition circuit 22.

In the embodiment of FIG. 1, there is provided only one sub ECU 200. Alternatively, there may be provided a plurality of sub ECUs 200. In such alternative embodiment, the ignition signal from the main ECU 100 is transmitted to each of the plurality of sub ECUs via the ignition communication line 2. The switched state of the manual cut-off switch 1 is also inputted to the microcomputer of each of the plurality of sub ECUs.

Next, a collective operation tool 300 which is connected to a connector 100b of the main ECU 100 at the time of compulsory actuation of each of a plurality of passenger protection devices will be described.

The collective operation tool 300 is an actuate instruction unit which outputs an actuate instruction signal to ignite each passenger protection device compulsorily. The collective operation tool 300 is used to ignite each passenger protection device compulsorily at the time of disposal of the passenger protection devices.

The collective operation tool 300 is provided so that it is connectable with the connector 100b of the main ECU 100 via a collective operation power supply line 3 or a collective operation communication line 4. The collective operation power supply line 3 is a power supply line which enables power supply from the collective operation tool 300 to the main ECU 100 even if no power supply is received from the vehicle power supply line 5. The collective operation power supply line 3 is connected to either the battery built in the collective operation tool 300 or another power supply (which is not carried on the vehicle) via the collective operation tool 300. The collective operation communication line 4 is a communication line on which a collective operation instruction signal to instruct the collective operation of each of a plurality of passenger protection devices is transmitted. Not only the collective operation instruction signal for operating all the passenger protection devices collectively, but also an individual instruction signal for operating individually each passenger protection device may be transmitted on the collective operation communication line 4.

Once the collective operation tool 300 is connected to the connector 100b of the main ECU 100, the power from the collective operation tool 300 is supplied to the power supply circuit 10 of the main ECU 100 even when no power supply is received from the vehicle power supply line 5, and at the same time, the power is supplied to the power supply circuit 20 of the sub ECU 200 via the main/sub ECU interconnect power supply line 6. The power supply circuits 10 and 20 generate a power supply voltage supplied to the respective internal circuits of a corresponding one of the main ECU 100 and the sub ECU 200.

When the collective operation instruction signal is received from the collective operation tool 300, the microcomputer 11 of the main ECU 100 outputs the ignition signal to ignite the passenger protection devices concerned, to the ignition circuit 12. Thereby, the passenger protection devices assigned for the main ECU 100 are actuated collectively. At the same time, the microcomputer 11 of the main ECU 100 outputs a collective-operation-specific ignition signal having a communication format different from that of a normal ignition signal, to the sub ECU 200 via the communication circuit 13 and the ignition communication line 2.

The normal ignition signal is an ignition signal which is outputted normally as a result of the above-mentioned ignition judgment using the sensors and safing sensor which detect an impact to the vehicle. And when the collective-operation-specific ignition signal is received, the microcomputer 21 of the sub ECU 200 recognizes that the received signal is a collective operation ignition signal. After recognizing the collective-operation-specific ignition signal, the microcomputer 21 of the sub ECU 200 outputs the ignition signal to ignite the passenger protection devices concerned, to the ignition circuit 22. At this time, the switched state of the manual cut-off switch 1 is canceled or neglected even if the switch 1 is turned on, and the passenger protection devices assigned for the sub ECU 200 are actuated collectively.

In this embodiment, communication between the main ECU 100 and the sub ECU 200 (including also the case in which a plurality of sub ECUs are provided) is carried out in accordance with a predetermined communication protocol, such as CAN (Controller Area Network) communication protocol or ignition-signal-specific communication protocol.

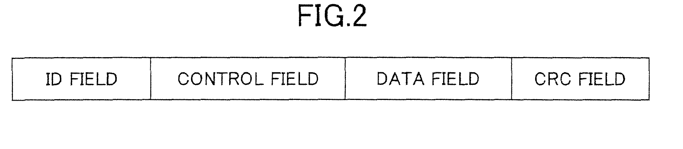

FIG. 2 shows the structure of one data frame which is transmitted by each of a plurality of ECUs which constitute a CAN communication system. As shown, one data frame which is transmitted by each ECU as data includes an ID field, a control field, data field, and a CRC (cyclic redundancy check) field. In the ID field, a frame ID (which may also be used as a level of priority of the data transmission or an identification number of the ECU concerned) which is identification information for the kind of the transmission data (the data frame) or distinguishing from other transmission data is retained. In the control field, the length of data in the data field or the like is retained. In the data field, the transmission data to be transmitted, whose length is varying in a range of 0 to 8 bytes, is retained. In the CRC field, the code for performing the cyclic redundancy check is retained.

As other elements of the data frame, the start of frame (SOF) which indicates the beginning of the data frame, the ACK field which is used for checking that reception of the data frame is completed normally, and the end of frame (EOF) which indicate the end of the data frame may be mentioned. For example, each ECU has a transmission rate of 500 kbps. In a case in which the length of the transmission data in the data field is 8 bytes, one frame data the size of which is about 120 bits is transmitted or received in about 250 microseconds.

In the case of the above-mentioned CAN communication protocol, the normal ignition signal or the collective-operation-specific ignition signal is retained in the data field of each data frame. In order to distinguish between the communication format of the ignition signal and the communication format of the collective-operation-specific ignition signal, it is adequate to change the structure of the communication data, such as changing the length of data in the data field, changing the parity setup, or changing the stop length setup. For example, the collective-operation-specific ignition signal in this embodiment has a data length shorter than that of the normal ignition signal. Alternatively, to allow the microcomputer 21 of the sub ECU 200 to distinguish between the normal ignition signal and the collective-operation-specific ignition signal, identification information, such as the frame ID which identifies each ignition signal, may be given to both or one of the two ignition signals. Alternatively, different identification information may be given to both the ignition signals so that they may be different from each other.

In this manner, the microcomputer 21 of the sub ECU 200 determines whether the received signal is a normal ignition signal or a collective-operation-specific ignition signal by the difference in the communication format or the identification information of the ignition signal received via the ignition communication line 2. Therefore, even if the manual cut-off switch 1 is turned to disable operation of the passenger protection device, the microcomputer 21 cancels (or neglects) the switched state of the manual cut-off switch 1 and actuates the passenger protection device certainly.

Next, a description will be given of another embodiment of the invention in which the microcomputer 21 cancels (or neglects) the switched state of the manual cut-off switch 1 (even when it is turned to disable the operation of the passenger protection device) and actuates the passenger protection device certainly, without distinguishing between the ignition signal and the collective-operation-specific ignition signal using by the difference in the communication format or the identification information of the ignition signal received via the ignition communication line 2.

If the collective operation tool 300 is connected to the connector 100b of the main ECU 100, the power is supplied to the power supply circuit 10 of the main ECU 100 even when no power supply is received from the vehicle power supply line 5. At the same time, the power from the main/sub ECU interconnect power supply line 6 is supplied to the power supply circuit 20 of the sub ECU 200. The power supply circuits 10 and 20 generate a power supply voltage to be supplied to the respective internal circuits of each ECU.

Namely, occurrence of power supply from the main/sub ECU interconnect power supply line 6 to the power supply circuit 20 of the sub ECU 200 means that the collective operation tool 300 is connected to the main ECU 100. Therefore, the power supply circuit 20 in this embodiment is configured to output a power supply signal which indicates the occurrence of the power supply from the main/sub ECU interconnect power supply line 6, to the microcomputer 21. Upon reception of this power supply signal, the microcomputer 21 recognizes that power supply is received from the collective operation tool 300.

In this case, if a collective operation instruction signal is transmitted by the collective operation tool 300 after the collective operation tool 300 is connected to the connector 100b of the main ECU 100, then the microcomputer 11 of the main ECU 100 outputs, upon reception of the collective operation instruction signal, an ignition signal to ignite the passenger protection devices concerned, to the ignition circuit 12. Thereby, the passenger protection devices assigned for the main ECU 100 are actuated collectively. At the same time, the microcomputer 11 of the main ECU 100 outputs an ignition signal to collectively ignite the passenger protection devices assigned for the sub ECU 200, which signal has a communication format that is the same as that of the normal ignition signal, to the microcomputer 21 of the sub ECU 200 via the communication circuit 13 and the ignition communication line 2. In this embodiment, the normal ignition signal is an ignition signal which is outputted as a result of the above-mentioned ignition judgment using the sensors and the safing sensor which detect impact to the vehicle.

And the microcomputer 21 of the sub ECU 200 recognizes that collective operation tool 300 is connected and the power supply from the collective operation tool 300 is performed, based on the power supply signal received from the power supply circuit 20. Even if the ignition signal having the communication format that is the same as that of the normal ignition signal is received, it is possible for the microcomputer 21 to detect that the received ignition signal is not the ignition signal outputted as a result of the ignition judgment using the sensors and the safing sensor which detect impact to the vehicle, and that it is an ignition signal outputted based on the actuate instruction signal from the collective operation tool 300. Namely, the microcomputer 21 of the sub ECU 200 is provided to recognize a collective operation ignition request from the collective operation tool 300. As a result of the recognition of the collective operation ignition request, the microcomputer 21 of the sub ECU 200 outputs an ignition signal to ignite the passenger protection devices collectively, to the ignition circuit 22. At this time, the switched state of the manual cut-off switch 1, even if it is turned on, is canceled, and the passenger protection devices assigned for the sub ECU 200 are actuated collectively.

Accordingly, when the microcomputer 21 of the sub ECU 200 receives an ignition signal having a communication format that is the same as that of the normal ignition signal but the collective operation tool 300 is connected, the microcomputer 21 can actuate the passenger protection devices certainly irrespective of the switched state of the manual cut-off switch 1 that is turned to disable the operation of the passenger protection devices.

This invention is not limited to the above-described embodiments and variations and modifications may be made without departing from the scope of the invention.

In the above-mentioned embodiments, the manual cut-off switch 1 has the two change states: ON state and OFF state. Alternatively, a manual cut-off switch having three or more change states may be used instead. For example, it is possible with the use of such a multi-stage switch that if the manual cut-off switch 1 is turned to a contact point A, operation of all the passenger protection devices is inhibited, if the manual cut-off switch 1 is turned to a contact point B, only operation of the passenger-seat air bag is inhibited, and if the manual cut-off switch 1 is turned to a contact point C, operation of all the passenger protection devices is permitted. It is a matter of course that the number of multi-stage switch contact points may be increased for further combinations of some of the passenger protection devices the operation of which is inhibited.

This international application is based upon and claims the benefit of priority of Japanese patent application No. 2005-73150, filed on March 15, 2005, the entire contents of which are incorporated herein by reference.

## Claims

1. An actuator of a passenger protection device, comprising:
an actuating unit actuating the passenger protection device in response to reception of a first ignition signal; and
a manual cut-off unit being turned on or off to selectively disable or enable operation of the passenger protection device,
the actuation of the passenger protection device by the actuating unit being inhibited when the manual cut-off unit is turned to disable the operation of the passenger protection device,
wherein, when a second ignition signal having a communication format different from that of the first ignition signal is received, the actuating unit actuates the passenger protection device irrespective of a switched state of the manual cut-off unit.

2. The actuator according to claim 1, wherein both the first ignition signal and the second ignition signal are transmitted on an ignition communication line.

3. The actuator according to claim 1, wherein the first ignition signal is transmitted by detection of an impact to a vehicle.

4. The actuator according to claim 1, wherein the actuator includes a plurality of actuating units and the second ignition signal is transmitted to collectively actuate a plurality of passenger protection devices which are respectively actuated by the plurality of actuating units.

5. The actuator according to claim 1, further comprising:
an actuate instruction unit outputting an actuate instruction signal to actuate the passenger protection device compulsorily; and
an ignition signal transmission unit transmitting the second ignition signal, wherein the ignition signal transmission unit transmits the second ignition signal in response to the actuate instruction signal.

6. The actuator according to claim 1, further comprising:
an actuate instruction unit outputting an actuate instruction signal to actuate the passenger protection device compulsorily; and
an ignition signal transmission unit transmitting the first ignition signal by detection of an impact to a vehicle, and transmitting the second ignition signal in response to the actuate instruction signal.

7. The actuator according to claim 1, wherein, when the second ignition signal having a data length different from that of the first ignition signal is received, the actuating unit actuates the passenger protection device irrespective of a switched state of the manual cut-off unit.

8. An actuator of a passenger protection device, comprising:
an actuate instruction unit outputting an actuate instruction signal to actuate the passenger protection device compulsorily;
an ignition signal transmission unit transmitting an ignition signal in response to either detection of an impact to a vehicle or reception of the actuate instruction signal;
an actuating unit actuating the passenger protection device in response to the ignition signal received from the ignition signal transmission unit; and
a manual cut-off unit being turned on or off to selectively disable or enable operation of the passenger protection device,
the actuation of the passenger protection device by the actuating unit being inhibited when the manual cut-off unit is turned to disable the operation of the passenger protection device,
wherein the actuate instruction unit is provided to supply power to the actuating unit, and, when a power supply from the actuate instruction unit to the actuating unit is detected, the actuating unit actuates the passenger protection device irrespective of a switched state of the manual cut-off unit.

9. The actuator according to claim 8, further comprising:
a vehicle power supply line from the vehicle to the actuating unit; and
a second power supply line from the actuate instruction unit to the actuating unit,
wherein the actuating unit is provided to distinguish between a power supply from the vehicle via the vehicle power supply line and a power supply from the actuate instruction unit via the second power supply line.

10. The actuator of claim 8, further comprising:
a vehicle power supply line from the vehicle to the actuating unit; and
a second power supply line from the actuate instruction unit to the actuating unit,
wherein the actuate instruction unit is provided to supply power to the actuating unit via the ignition signal transmission unit, and
wherein the actuating unit is provided to distinguish between a power supply from the vehicle via the vehicle power supply line and a power supply from the actuate instruction unit via the second power supply line.
